# FASCICULE DE BREVET EUROPEEN

(11) **EP 1 505 280 B1**
(45) Date de publication et mention de la délivrance du brevet: **09.11.2005**
(21) Numéro de dépôt: 04291543.9
(22) Date de dépôt: 18.06.2004
(51) Int. Cl.: F02C 9/28, F02C 9/42

(54) **Procédé et dispositif pour l'alimentation des turboréacteurs d'un aéronef en vol automatique**
Verfahren und Vorrichtung zur Triebwerkstreibstoffzufuhr bei einem Flugzeug im Automatikflug
Method and apparatus for supplying fuel to jet engines of a plane in automatic flight

(30) Priorité: 06.08.2003 FR 0309698
(43) Date de publication de la demande: 09.02.2005
(73) Titulaire: AIRBUS France, 31060 Toulouse (FR)
(72) Inventeur: Guillot-Salomon, Damien, 31400 Toulouse (FR); Potagnik, Nicolas, 31300 Toulouse (FR)
(74) Mandataire: Bonnetat, Christian

(56) Documents cités:
- US-A- 3 479 822
- US-A- 4 522 025
- US-A- 4 644 744
- US-A- 5 224 340
- US-A- 5 285 638

## Description

La présente invention concerne un procédé et un dispositif pour l'alimentation en carburant des turboréacteurs d'un aéronef multiréacteur volant en mode de pilotage automatique.

On sait que de tels turboréacteurs sont régulés par un paramètre fiable, appelé paramètre de conduite, représentatif du niveau de poussée desdits turboréacteurs et qu'il existe deux sortes de paramètres de conduite, dont l'un est le rapport EPR entre les pressions des gaz à la sortie et à l'entrée des turboréacteurs et l'autre est lié à la vitesse N1 de la soufflante de ces derniers, comme décrit dans US 5 224 340 A.

Pour un turboréacteur déterminé, la nature du paramètre de conduite, à savoir le rapport EPR ou la vitesse N1, est fixé par le constructeur dudit turboréacteur.

En fonction des conditions de vol (nombre de Mach, altitude, pression, température, ...) et de la poussée exigée d'un turboréacteur, un calculateur associé spécifiquement à ce dernier, calcule une valeur de consigne pour le paramètre de conduite dudit turboréacteur et gère le débit de carburant injecté dans celui-ci pour aligner la valeur mesurée dudit paramètre de conduite sur ladite valeur de consigne.

Notamment lorsque l'aéronef est en vol automatique en palier à altitude stabilisée, la poussée desdits turboréacteurs est gérée automatiquement par le système de contrôle automatique de poussée, qui, en fonction desdites conditions de vol, détermine ladite valeur de consigne du paramètre de conduite des moteurs. Si ce dernier paramètre est le rapport EPR, le système de contrôle automatique de poussée détermine une valeur de consigne EPRt et tous les turboréacteurs de l'aéronef s'asservissent sur cette valeur de consigne commune. Cependant, bien qu'asservis en commun sur cette valeur de consigne EPRt, lesdits turboréacteurs présentent, du fait de leurs différences de positionnement dans l'écoulement aérodynamique autour de l'aéronef, des vitesses de rotation de leurs soufflantes différentes. Il en résulte des vibrations, notamment sonores, dans l'aéronef, nuisant au confort des passagers et de l'équipage.

La présente invention a pour objet de remédier à cet inconvénient.

A cette fin, selon l'invention, le procédé d'alimentation en carburant des turboréacteurs d'un aéronef multiréacteur volant en mode de pilotage automatique, procédé selon lequel l'alimentation en carburant de chacun desdits turboréacteurs est asservie à une valeur de consigne EPRt, commune à tous lesdits turboréacteurs et correspondant à une valeur particulière du rapport EPR entre les pressions des gaz à la sortie et à l'entrée des turboréacteurs, ladite valeur de consigne EPRt dépendant de l'ordre de poussée automatique et des conditions de vol de l'aéronef, est remarquable en ce que, en vol en palier à altitude stabilisée dudit aéronef, ladite valeur de consigne EPRt commune est convertie en une valeur de consigne N1t liée à la vitesse de rotation N1 de la soufflante desdits turboréacteurs et en ce que l'alimentation en carburant de tous lesdits turboréacteurs est asservie à ladite valeur de consigne N1t.

Ainsi, dans ce cas de vol, les soufflantes de tous les turboréacteurs de l'aéronef sont asservies à la même vitesse de rotation, ce qui élimine les vibrations mentionnées ci-dessus.

On remarquera que la mise en oeuvre de la présente invention :
- nécessite de convertir la valeur de consigne EPRt en une valeur de consigne N1t, ce qui est aisé puisque les constructeurs de turboréacteurs fournissent des tables de conversion qui, pour différents paramètres de vol tels que altitude, nombre de Mach, pression, température, ..., indiquent la valeur de la vitesse de rotation N1 correspondant à une valeur du paramètre EPR ;
- nécessite la mesure du paramètre N1 sur lesdits turboréacteurs pour pouvoir asservir la vitesse de rotation de la soufflante de ceux-ci sur la valeur de consigne N1t ; cependant, à d'autres fins, une telle mesure est systématiquement réalisée sur les turboréacteurs dont le paramètre de conduite est le rapport EPR, de sorte que la mesure du paramètre N1 est déjà disponible à bord de l'aéronef ; et
- dégrade quelque peu les performances des turboréacteurs, puisque la régulation à l'aide du paramètre de conduite N1 d'un turboréacteur dont le paramètre de conduite est, par construction, le rapport EPR ne peut être optimale. Aussi, pour éviter des conséquences nuisibles d'un tel mode dégradé de fonctionnement, le remplacement de la valeur de consigne EPRt par la valeur de consigne N1t est avantageusement soumis à une ou plusieurs conditions supplémentaires.
L'une d'entre elles est que le nombre de Mach de l'aéronef est supérieur à un premier seuil en deçà duquel lesdits turboréacteurs pourraient fonctionner trop en dessous de leurs performances. Un tel premier seuil peut être de l'ordre de Mach 0,45.
Une autre de ces conditions supplémentaires peut résider en ce que les différences entre, d'une part, la valeur maximale du rapport EPR à laquelle peuvent fonctionner les turboréacteurs et, d'autre part, chacune des valeurs actuelles de ce rapport, mesurées pour chacun des turboréacteurs, sont supérieures à un second seuil en deçà duquel lesdits turboréacteurs ne pourraient pas maintenir la vitesse de l'aéronef. Un tel second seuil peut être au moins approximativement égal à 0,02.

De façon connue, le système d'alimentation en carburant des turboréacteurs d'un aéronef multiréacteur volant en mode de pilotage automatique, le paramètre de conduite de chacun desdits turboréacteurs étant le rapport EPR entre les pressions des gaz à la sortie et à l'entrée du turboréacteur correspondant et ledit aéronef comportant :
- des moyens pour mesurer la valeur actuelle dudit paramètre de conduite EPR pour chacun desdits turboréacteurs ;
- des moyens pour mesurer la valeur actuelle de la vitesse de rotation N1 de la soufflante de chacun desdits turboréacteurs,
est constitué d'une pluralité de dispositifs d'alimentation dont chacun d'eux est associé à l'un desdits turboréacteurs et comporte :
- un premier calculateur engendrant, à partir de l'ordre de poussée automatique et des conditions de vol actuelles, une valeur de consigne EPRt pour ledit paramètre de conduite EPR, ladite valeur de consigne EPRt étant identique pour tous les turboréacteurs ;
- un dispositif d'asservissement recevant ladite valeur de consigne EPRt et la valeur mesurée actuelle correspondante dudit paramètre de conduite EPR et tendant à aligner ladite valeur mesurée actuelle sur ladite valeur de consigne EPRt ;
- un second calculateur commandé par ledit dispositif d'asservissement et calculant le débit de carburant à adresser audit moteur pour aligner ladite valeur mesurée actuelle du paramètre de conduite sur la valeur de consigne EPRt ; et
- des moyens d'alimentation en carburant commandés par ledit second calculateur et délivrant audit moteur le débit de carburant calculé par celui-ci.

Conformément à la présente invention, un tel système d'alimentation en carburant est remarquable :
- en ce que chaque dispositif d'alimentation comporte, en parallèle sur ledit dispositif d'asservissement à ladite valeur de consigne EPRt, le montage en série :
   . d'une table de conversion, identique pour tous lesdits dispositifs d'alimentation et reliée audit premier calculateur pour recevoir ladite valeur de consigne EPRt, ladite table de conversion étant apte à convertir ladite valeur de consigne EPRt en une valeur de consigne N1t de ladite vitesse de rotation N1 ; et
   . d'un dispositif d'asservissement recevant ladite valeur de consigne N1t et la valeur mesurée actuelle correspondante de ladite vitesse de rotation N1 et tendant à aligner cette valeur mesurée actuelle sur ladite valeur de consigne N1t ;
- en ce que chaque dispositif d'alimentation comporte, entre lesdits dispositifs d'asservissement sur les valeurs de consigne EPRt et N1t, d'une part, et ledit second calculateur, d'autre part, un moyen de commutation apte à relier à ce dernier, dans un premier état, ledit dispositif d'asservissement associé à la valeur de consigne EPRt, et, dans un second état, ledit dispositif d'asservissement associé à la valeur de consigne N1t ; et
- en ce que lesdits moyens de commutation sont commandés en commun par un dispositif de commande pour passer dudit premier état audit second état lorsque l'aéronef est en vol automatique en palier à altitude stabilisée.

Avantageusement, un tel dispositif de commande est du type porte ET, ne délivrant un ordre de commutation que lorsque toutes ses entrées, qui reçoivent entre autres des signaux représentatifs du fait que l'aéronef est en vol automatique et que ce vol s'effectue en palier à altitude stabilisée, sont alimentées. Inversement, grâce à une telle structure dudit dispositif de commande, lesdits moyens de commutation repassent dudit second état audit premier état, dès que l'un desdits signaux représentatifs disparaît.

De préférence, afin d'éviter tout passage intempestif et prématuré des moyens de commutation de leur premier état à leur second état, on prévoit un dispositif de temporisation entre ledit dispositif de commande et lesdits moyens de commutation.

Il va de soi que ces moyens de commutation peuvent présenter toute forme technologique possible, de préférence du type solide.

Les figures du dessin annexé feront bien comprendre comment l'invention peut être réalisée. Sur ces figures, des références identiques désignent des éléments semblables.

La figure 1 montre en perspective un avion gros porteur quadriréacteur.

La figure 2 est une vue en perspective éclatée schématique de l'un quelconque des turboréacteurs de l'avion de la figure 1.

La figure 3 est le schéma synoptique du système d'alimentation desdits turboréacteurs en carburant, conforme à la présente invention.

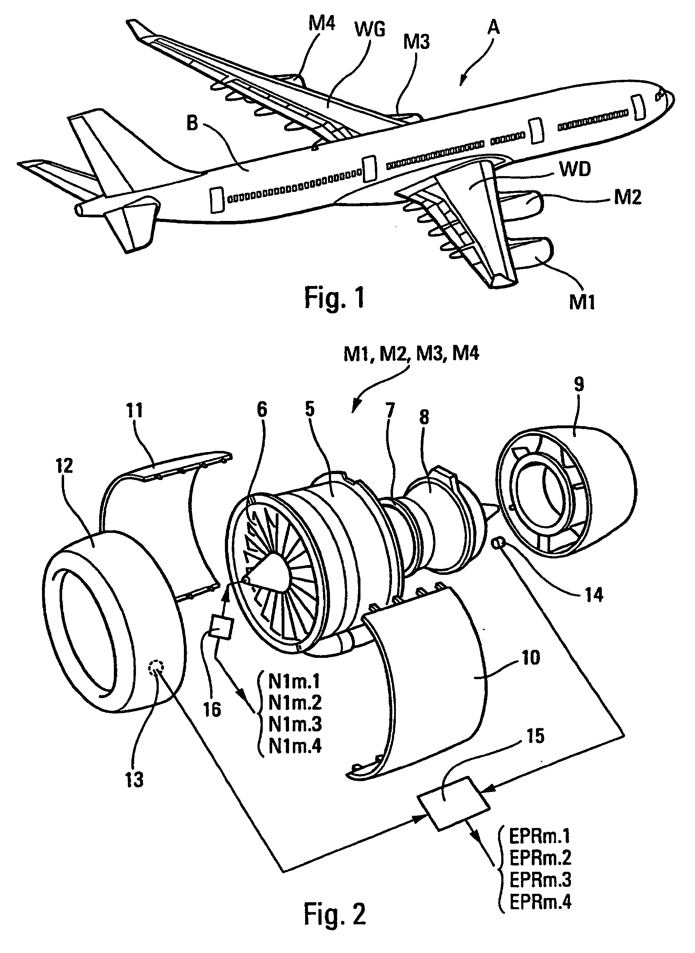

L'avion A montré schématiquement sur la figure 1 comporte deux ailes WD et WG, symétriques l'une de l'autre par rapport au fuselage B dudit avion. L'aile WD porte un moteur externe M1 et un moteur interne M2. De même, l'aile WG porte un moteur interne M3 et un moteur externe M4.

Comme cela est montré schématiquement sur la figure 2, chaque moteur M1 à M4 est du type turboréacteur à double flux et comporte, de façon connue, un générateur central d'air chaud 5, une soufflante 6, des étages de compresseur 7, une turbine 8, un agencement de tuyère 9, deux capots latéraux 10 et 11 et un capot d'entrée d'air 12.

De façon également connue, le paramètre de conduite de chacun desdits moteurs --paramètre qui est représentatif du niveau de poussée du moteur correspondant-- est celui connu en aéronautique sous la désignation EPR (Engine Pressure Ratio) et qui est égal au rapport entre la pression des gaz en sortie de la turbine 8 et la pression des gaz dans le capot d'entrée d'air 12. Une mesure EPRm.1 à EPRm.4 de ce paramètre de conduite, respectivement pour les moteurs M1 à M4, est obtenue en disposant un capteur de pression 13 dans le capot d'entrée d'air 12 et un capteur de pression 14 à la sortie de la turbine 8 et en adressant les mesures desdits capteurs 13 et 14 à un diviseur 15.

Par ailleurs, un capteur de vitesse de rotation 1 6 est prévu pour donner la mesure N1m.1 à N1m.4 de la vitesse de rotation N1 de la soufflante 6 de chacun desdits moteurs M1 à M4, respectivement.

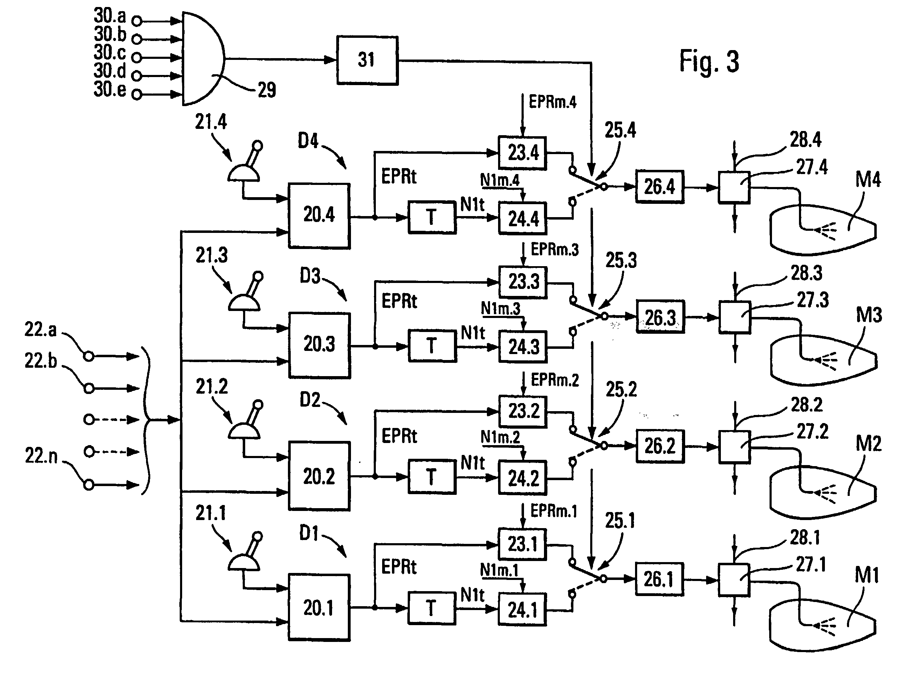

Le système d'alimentation en carburant des turboréacteurs M1 à M4 est illustré schématiquement par la figure 3, sur laquelle on peut voir que ce système est constitué de quatre dispositifs d'alimentation D1 à D4, respectivement associés aux turboréacteurs M1 à M4.

Chaque dispositif d'alimentation D1 à D4 comporte :
- un premier calculateur 20.1 à 20.4 recevant, d'une part, l'ordre de poussée automatique commun correspondant aux positions des manettes 21.1 à 21.4 et, d'autre part, les conditions de vol actuelles apparaissant sur des entrées 22.a, 22.b, ..., 22.n. Ces conditions de vol actuelles sont des mesures de, par exemple, le nombre de Mach auquel vole l'avion A, l'altitude de vol de ce dernier, la pression et la température de l'environnement dudit avion, etc ... A partir de ces informations d'entrée, chaque premier calculateur 20.1 à 20.4 calcule une valeur de consigne EPRt pour ledit paramètre de conduite EPR, cette valeur de consigne étant identique pour tous les dispositifs D1 à D4 ;
- un premier dispositif d'asservissement 23.1 à 23.4 recevant ladite valeur de consigne EPRt et la valeur mesurée actuelle EPRm.1 à EPRm.4 dudit paramètre de conduite EPR. Le premier dispositif d'asservissement 23.1 à 23.4 a pour objet de tendre à aligner ladite valeur mesurée actuelle EPRm.1 à EPRm.4 sur la valeur de consigne EPRt ;
- une branche de circuit, montée en parallèle sur ledit premier dispositif d'asservissement 23.1 à 23.4 et comprenant :
   ■ une table T, identique pour tous les dispositifs D1 à D4, recevant, d'une part (de façon non représentée à des fins de clarté) les conditions de vol apparaissant sur les entrées 22.a à 22.n, et, d'autre part, ladite valeur de consigne EPRt dudit premier calculateur 20.1 à 20.4 et apte à convertir ladite valeur de consigne EPRt en une valeur de consigne N1t de ladite vitesse de rotation N1 des soufflantes 6 ; et
   ■ un second dispositif d'asservissement 24.1 à 24.4 recevant ladite valeur de consigne N1t et la valeur mesurée actuelle correspondante N1m.1 àN1m.4. Le dispositif d'asservissement 24.1 à 24.4 a pour objet de tendre à aligner ladite valeur mesure actuelle N1m.1 à N1m.4 sur la valeur de consigne N1t ;
- un moyen de commutation commandable 25.1 à 25.4 relié, dans un premier état, à la sortie dudit premier dispositif d'asservissement 23.1 à 23.4 et, dans un second état, à la sortie dudit second dispositif d'asservissement 24.1 à 24.4 ;
- un second calculateur 26.1 à 26.4 commandé, suivant l'état du moyen de commutation commandable 25.1 à 25.4, soit par le premier dispositif d'asservissement 23.1 à 23.4, soit par le second dispositif d'asservissement 24.1 à 24.4, et calculant le débit de carburant à adresser au moteur M1 à M4 pour aligner la valeur mesurée actuelle EPRm.1 à EPRm.4 ou N1m.1 à N1m.4 du paramètre de conduite EPR ou N1 sur la valeur de consigne EPRt ou N1t ; et
- des moyens d'alimentation en carburant (électrovalves) 27.1 à 27.4, en relation avec un circuit de comburant 28.1 à 28.4, commandés par ledit second calculateur 26.1 à 26.4 et délivrant au moteur M1 à M4 le débit de carburant calculé par ce dernier.

Par ailleurs, le système d'alimentation en carburant comporte un dispositif de commande 29, par exemple du type porte ET, pour commander en commun les moyens de commutation 25.1 à 25.4. Les entrées 30.a à 30.e dudit dispositif de commande 29 reçoivent des signaux électriques respectivement représentatifs :
- du fait que l'avion A se trouve en pilotage automatique ;
- du fait que le paramètre de conduite usuel des moteurs M1 à M4 est le paramètre EPR ;
- du fait que l'avion A est en vol en palier à altitude stabilisée ;
- du fait que le nombre de Mach auquel vole l'avion A est au moins égal à un seuil, par exemple égal à Mach 0,45 ; et
- du fait que les différences entre, d'une part, la valeur maximale du rapport EPR à laquelle peuvent fonctionner les turboréacteurs M1 à M4 et, d'autre part, chacune des valeurs actuelles EPRm.1 à EPRm.4 de ce rapport sont supérieures à un seuil, par exemple égal à 0,02, en deçà duquel lesdits turboréacteurs ne pourraient pas maintenir la vitesse de l'aéronef A.

Un dispositif de temporisation 31 peut être disposé entre le dispositif de commande 29 et les moyens de commutation 25.1 à 25.4, pour éviter une commande intempestive transitoire de ces derniers.

Ainsi, lorsque les conditions apparaissant aux entrées 30.a à 30.d du dispositif de commande 29 ne sont pas réunies, les moyens de commutation 25.1 à 25.4 sont dans leur premier état et les moteurs 1 à M4 sont régulés sur la valeur de consigne EPRt.

Dans ce cas, il peut se faire que les vitesses de rotation N1 des soufflantes 6 des turboréacteurs M1 à M4 soient différentes, ce qui engendre des vibrations dans l'avion A. De telles vibrations apparaissent notamment lorsque la soufflante 6 d'un turboréacteur externe M1 (ou M4) ne présente pas la même vitesse de rotation que celle du turboréacteur interne M2 (ou M3) correspondant. Il en résulte alors des vibrations dans l'aile WD (ou WG) correspondante, avec transmission desdites vibrations par cette dernière au fuselage B.

En revanche, dès que ces conditions sont simultanément réalisées, le dispositif de commande 29 fait commuter, avec le retard apporté par le dispositif de temporisation 31, les moyens de commutation 25.1 à 25.4 qui prennent alors leur second état. Les moteurs M1 à M4 sont alors régulés sur la valeur de consigne N1t.

Il en résulte donc que les soufflantes 6 de tous les turboréacteurs M1 à M4 tournent toutes à la même vitesse N1, ce qui élimine les vibrations mentionnées ci-dessus.

Dès qu'une desdites conditions disparaît, les moyens de commutation 25.1 à 25.4 reprennent leur premier état et les moteurs M1 à M4 sont de nouveau régulés sur la valeur de consigne EPRt.

Bien que, sur la figure 2, on ait représenté les moyens de commutation 25.1 à 25.4 de façon symboliquement figurative, il va de soi que ces moyens de commutation peuvent se présenter sous toute autre forme de réalisation.

## Revendications

1. Procédé d'alimentation en carburant des turboréacteurs (M1 à M4) d'un aéronef multiréacteur (A) volant en mode de pilotage automatique, procédé selon lequel l'alimentation en carburant de chacun desdits turboréacteurs est asservie à une valeur de consigne EPRt, commune à tous lesdits turboréacteurs et correspondant à une valeur particulière du rapport EPR entre les pressions des gaz à la sortie et à l'entrée des turboréacteurs, ladite valeur de consigne EPRt dépendant de l'ordre de poussée automatique et des conditions de vol de l'aéronef,
**caractérisé en ce que,** en vol en palier à altitude stabilisée dudit aéronef (A), ladite valeur de consigne EPRt commune est convertie en une valeur de consigne N1t liée à la vitesse de rotation N1 de la soufflante desdits turboréacteurs et **en ce que** l'alimentation en carburant de tous lesdits turboréacteurs est asservie à ladite valeur de consigne N1t.

2. Procédé selon la revendication 1,
**caractérisé en ce que** le remplacement de la valeur de consigne EPRt par la valeur de consigne N1t est de plus soumis à la condition que le nombre de Mach de l'aéronef (A) est supérieur à un premier seuil en deçà duquel lesdits turboréacteurs pourraient fonctionner en dessous de leurs performances.

3. Procédé selon la revendication 2,
**caractérisé en ce que** ledit premier seuil est au moins approximativement égal à Mach 0,45.

4. Procédé selon l'une des revendications 1 à 3,
**caractérisé en ce que** le remplacement de la valeur de consigne EPRt par la valeur de consigne N1t est de plus soumis à la condition que les différences entre, d'une part, la valeur maximale du rapport EPR à laquelle peuvent fonctionner lesdits turboréacteurs (M1 à M4) et, d'autre part, chacune des valeurs actuelles (EPRm.1 à EPRm.4) de ce rapport, mesurées pour chacun desdits turboréacteurs, sont supérieures à un second seuil en deçà duquel lesdits turboréacteurs ne pourraient pas maintenir la vitesse dudit aéronef.

5. Procédé selon la revendication 4,
**caractérisé en ce que** ledit second seuil est au moins approximativement égal à 0,02.

6. Système d'alimentation en carburant des turboréacteurs (M1 à M4) d'un aéronef multiréacteur (A) volant en mode de pilotage automatique, le paramètre de conduite de chacun desdits turboréacteurs étant le rapport EPR entre les pressions des gaz à la sortie et à l'entrée du turboréacteur correspondant et ledit aéronef comportant :
- des moyens (13 à 15) pour mesurer la valeur actuelle (EPRm.1 à EPRm.4) dudit paramètre de conduite EPR pour chacun desdits turboréacteurs ;
- des moyens (16) pour mesurer la valeur actuelle (N1 m.1 àN1 m.4) de la vitesse de rotation N1 de la soufflante de chacun desdits turboréacteurs,
tandis que ledit système d'alimentation est constitué d'une pluralité de dispositifs d'alimentation (D1 à D4) dont chacun d'eux est associé à l'un desdits turboréacteurs et comporte :
- un premier calculateur (20.1 à 20.4) engendrant, à partir de l'ordre de poussée automatique et des conditions de vol actuelles, une valeur de consigne EPRt pour ledit paramètre de conduite EPR, ladite valeur de consigne EPRt étant identique pour tous les turboréacteurs (M1 à M4) ;
- un dispositif d'asservissement (23.1 à 23.4) recevant ladite valeur de consigne EPRt et la valeur mesurée actuelle correspondante (EPRm.1 à EPRm.4) dudit paramètre de conduite EPR et tendant à aligner ladite valeur mesurée actuelle sur ladite valeur de consigne EPRt ;
- un second calculateur (26.1 à 26.4) commandé par ledit dispositif d'asservissement (23.1 à 23.4) et calculant le débit de carburant à adresser audit moteur pour aligner ladite valeur mesurée actuelle du paramètre de conduite sur la valeur de consigne ; et
- des moyens d'alimentation en carburant (27.1 à 27.4) commandés par ledit second calculateur et délivrant audit moteur le débit de carburant calculé par celui-ci,
**caractérisé :**
- **en ce que** chaque dispositif d'alimentation (D1 à D4) comporte, en parallèle sur ledit dispositif (23.1 à 23.4) d'asservissement à ladite valeur de consigne EPRt correspondant, le montage en série :
. d'une table de conversion (T), identique pour tous lesdits dispositifs d'alimentation (D1 à D4) et reliée audit premier calculateur (20.1 à 20.4) pour recevoir ladite valeur de consigne EPRt, ladite table de conversion (T) étant apte à convertir ladite valeur de consigne EPRt en une valeur de consigne N1t de ladite vitesse de rotation N1 ; et
. d'un dispositif d'asservissement (24.1 à 24.4) recevant ladite valeur de consigne N1t et la valeur mesurée actuelle correspondante (N1m.1 à N1m.4) de ladite vitesse de rotation N1 et tendant à aligner cette valeur mesurée actuelle sur ladite valeur de consigne N1t ;
- en ce que chaque dispositif d'alimentation (D1 à D4) comporte, entre lesdits dispositifs d'asservissement (23.1 à 23.4 - 24.1 à 24.4) sur les valeurs de consigne EPRt et N1t, d'une part, et ledit second calculateur (26.1 à 26.4), d'autre part, un moyen de commutation (25.1 à 25.4) apte à relier à ce dernier, dans un premier état, ledit dispositif (23.1 à 23.4) d'asservissement associé à la valeur de consigne EPRt, et, dans un second état, ledit dispositif (24.1 à 24.4) d'asservissement associé à la valeur de consigne N1t ; et
- en ce que lesdits moyens de commutation (25.1 à 25.4) sont commandés en commun par un dispositif de commande (29) pour passer dudit premier état audit second état lorsque l'aéronef (A) est en vol automatique en palier à altitude stabilisée.

7. Système selon la revendication 6,
**caractérisé en ce que** ledit dispositif de commande (29) est du type porte ET, ne délivrant un ordre de commutation auxdits moyens de commutation (25.1 à 25.4) que lorsque toutes ses entrées (30.a à 30.d) sont alimentées.

8. Système selon l'une des revendications 6 ou 7,
**caractérisé en ce qu'**un dispositif de temporisation (31) est disposé entre ledit dispositif de commande (29) et lesdits moyens de commutation (25.1 à 25.4).

## Patentansprüche

1. Verfahren zur Treibstoffversorgung der Turbostrahltriebwerke (M1 bis M4) eines mit Autopilot fliegenden Flugzeugs (A) mit mehreren Triebwerken, demgemäß die Treibstoffversorgung jedes der Turbostrahltriebwerke auf einen Sollwert EPRt geregelt wird, der für alle Turbostrahltriebwerke gleichermaßen gilt, und der einem bestimmten Wert des Verhältnisses EPR zwischen den Gasdrücken am Ausgang und am Eingang der Turbostrahltriebwerke entspricht, wobei der Sollwert EPRt von dem automatischen Schubbefehl und den Flugbedingungen des Flugzeugs abhängt,
**dadurch gekennzeichnet, dass** im Horizontalflug des Flugzeugs (A) unter Beibehaltung der Höhe der gemeinsame Sollwert EPRt in einen Sollwert N1t umgewandelt wird, der mit der Rotationsgeschwindigkeit N1 des Gebläses der Turbostrahltriebwerke zusammenhängt, und dass die Treibstoffversorgung aller Turbostrahltriebwerke auf den Sollwert N1t geregelt wird.

2. Verfahren nach Anspruch 1,
**dadurch gekennzeichnet, dass** das Ersetzen des Sollwerts EPRt durch den Sollwert N1t ferner der Bedingung unterworfen ist, dass die Mach-Zahl des Flugzeugs (A) größer ist als ein erster Schwellenwert, unter dem die Turbostrahltriebwerke nicht ihre volle Leistung bringen könnten.

3. Verfahren nach Anspruch 2,
**dadurch gekennzeichnet, dass** der erste Schwellenwert wenigstens annähernd gleich einer Mach-Zahl von 0,45 ist.

4. Verfahren nach einem der Ansprüche 1 bis 3,
**dadurch gekennzeichnet, dass** das Ersetzen des Sollwerts EPRt durch den Sollwert N1t ferner der Bedingung unterworfen ist, dass die Differenzen zwischen einerseits dem Maximalwert des Verhältnisses EPR, bei dem die Turbostrahltriebwerke (M1 bis M4) funktionieren können, und andererseits dem jeweiligen aktuellen Wert (EPRm.1 bis EPRm.4) dieses Verhältnisses, der an jedem der Turbostrahltriebwerke gemessen wird, größer sind als ein zweiter Schwellenwert, unter dem die Turbostrahltriebwerke die Geschwindigkeit des Flugzeuges nicht aufrechterhalten könnten.

5. Verfahren nach Anspruch 4,
**dadurch gekennzeichnet, dass** der zweite Schwellenwert wenigstens annähernd gleich 0,02 ist.

6. System zur Treibstoffversorgung der Turbostrahltriebwerke (M1 bis M4) eines mit Autopilot fliegenden Flugzeugs (A) mit mehreren Triebwerken, wobei der Triebwerksparameter jedes der Turbostrahltriebwerke das Verhältnis EPR zwischen den Gasdrücken am Ausgang und am Eingang des entsprechenden Turbostrahltriebwerks ist, und wobei das Flugzeug aufweist:
- Mittel (13 bis 15) zum Messen des aktuellen Werts (EPRm.1 bis EPRm.4) des Triebwerksparameters EPR für jedes der Turbostrahltriebwerke;
- Mittel (16) zum Messen des aktuellen Werts (N1m.1 bis N1m.4) der Rotationsgeschwindigkeit N1 des Gebläses des jeweiligen Turbostrahltriebwerks, während das Versorgungssystem aus einer Vielzahl von Versorgungsvorrichtungen (D1 bis D4) besteht, die jeweils mit einem der Turbostrahltriebwerke verbunden sind, und aufweist:
- eine erste Rechenvorrichtung (20.1 bis 20.4), die aus dem automatischen Schubbefehl und den aktuellen Flugbedingungen einen Sollwert EPRt für den Triebwerksparameter EPR erzeugt, wobei der Sollwert EPRt für alle Turbostrahltriebwerke (M1 bis M4) identisch ist;
- eine Regelvorrichtung (23.1 bis 23.4), die den Sollwert EPRt und den entsprechenden aktuellen Messwert (EPRm.1 bis EPRm.4) des Triebwerksparameters EPR empfängt und versucht, den aktuellen Messwert an den Sollwert EPRt anzupassen;
- eine zweite Rechenvorrichtung (26.1 bis 26.4), die von der Regelvorrichtung (23.1 bis 23.4) gesteuert wird und den Durchfluss des Treibstoffs berechnet, der dem Triebwerk zugeführt werden soll, um den aktuellen Messwert des Triebwerksparameters an den Sollwert anzupassen; und
- Mittel für die Treibstoffversorgung (27.1 bis 27.4), die von der zweiten Rechenvorrichtung gesteuert werden und dem Triebwerk die von der Rechenvorrichtung berechnete Treibstoffmenge zuführen,
**dadurch gekennzeichnet,**
- **dass** jede Versorgungsvorrichtung (D1 bis D4) parallel auf der entsprechenden Vorrichtung (23.1 bis 23.4) zur Regelung auf den Sollwert EPRt die Reihenmontage aufweist bestehend aus:
. einer Konversionstabelle (T), die für alle Versorgungsvorrichtungen (D1 bis D4) identisch ist und mit der ersten Rechenvorrichtung (20.1 bis 20.4) verbunden ist, um den Sollwert EPRt zu empfangen, wobei die Konversionstabelle (T) dazu ausgelegt ist, den Sollwert EPRt in einen Sollwert N1t der Rotationsgeschwindigkeit N1 umzuwandeln; und
. einer Regelvorrichtung (24.1 bis 24.4), die den Sollwert N1t und den entsprechenden aktuellen Messwert (N1m.1 bis N1m.4) der Rotationsgeschwindigkeit N1 empfängt und versucht, den aktuellen Messwert an den Sollwert N1t anzupassen;
- dass jede Versorgungsvorrichtung (D1 bis D4) zwischen den Vorrichtungen (23.1 bis 23.4 - 24.1 bis 24.4) zur Regelung auf die Sollwerte EPRt und N1t einerseits und der zweiten Rechenvorrichtung (26.1 bis 26.4) andererseits, ein Umschaltmittel (25.1 bis 25.4) aufweist, das so ausgelegt ist, dass es die zweite Rechenvorrichtung (26.1 bis 26.4) in einem ersten Zustand mit der zum Sollwert EPRt gehörenden Regelvorrichtung (23.1 bis 23.4) und in einem zweiten Zustand mit der zum Sollwert N 1 t gehörenden Regelvorrichtung (24.1 bis 24.4) verbindet; und
- dass die Umschaltmittel (25.1 bis 25.4) gemeinsam über eine Steuervorrichtung (29) gesteuert werden, um von dem ersten Zustand in den zweiten Zustand zu wechseln, wenn sich das Flugzeug (A) im automatisch gesteuerten Horizontalflug unter Beibehaltung der Höhe befindet.

7. System nach Anspruch 6,
**dadurch gekennzeichnet, dass** die Steuervorrichtung (29) ein UND-Gatter ist und nur dann einen Umschaltbefehl an die Umschaltmittel (25.1 bis 25.4) sendet, wenn alle ihre Eingänge (30.a bis 30.d) ein Signal empfangen haben.

8. System nach einem der Ansprüche 6 oder 7,
**dadurch gekennzeichnet, dass** zwischen der Steuervorrichtung (29) und den Umschaltmitteln (25.1 bis 25.4) eine Verzögerungsvorrichtung (31) angeordnet ist.

## Claims

1. A process for supplying fuel to the turbojets (M1 to M4) of a multijet aircraft (A) flying in automatic pilot mode, according to which process the fuel supply to each of said turbojets is slaved to a preset value EPRt, common to all said turbojets and corresponding to a particular value of the ratio EPR of the gas pressures at the outlet and at the inlet of the turbojets, said preset value EPRt depending on the automatic thrust order and on the flight conditions of the aircraft,
wherein, when said aircraft (A) is in level flight at steady altitude, said common preset value EPRt is converted into a preset value N1t related to the speed of rotation N1 of the fan of said turbojets and wherein the fuel supply to all said turbojets is slaved to said preset value N1t.

2. The process as claimed in claim 1,
wherein the replacement of the preset value EPRt by the preset value N1t is moreover subject to the condition that the Mach number of the aircraft (A) is greater than a first threshold short of which said turbojets could operate below their performance.

3. The process as claimed in claim 2,
wherein said first threshold is at least approximately equal to Mach 0.45.

4. The process as claimed in any of claims 1 to 3,
wherein the replacement of the preset value EPRt by the preset value N1t is moreover subject to the condition that the differences between, on the one hand, the maximum value of the ratio EPR at which said turbojets (M1 to M4) can operate and, on the other hand, each of the current values (EPRm.1 to EPRm.4) of this ratio, measured for each of said turbojets, are greater than a second threshold short of which said turbojets could not maintain the speed of said aircraft.

5. The process as claimed in claim 4,
wherein said second threshold is at least approximately equal to 0.02.

6. A system for supplying fuel to the turbojets (M1 to M4) of a multijet aircraft (A) flying in automatic pilot mode, the driving parameter of each of said turbojets being the ratio EPR of the gas pressures at the outlet and at the inlet of the corresponding turbojet and said aircraft comprising:
- means (13 to 15) for measuring the current value (EPRm.1 to EPRm.4) of said driving parameter EPR for each of said turbojets;
- means (16) for measuring the current value (N1m.1 to Nlm.4) of the speed of rotation N1 of the fan of each of said turbojets,
while said supply system consists of a plurality of supply devices (D1 to D4) each of which is associated with one of said turbojets and comprises:
- a first computer (20.1 to 20.4) producing, on the basis of the automatic thrust order and of the current flight conditions, a preset value EPRt for said driving parameter EPR, said preset value EPRt being identical for all the turbojets (M1 to M4);
- a slaving device (23.1 to 23.4) receiving said preset value EPRt and the corresponding current measured value (EPRm.1 to EPRm.4) of said driving parameter EPR and tending to align said current measured value with said preset value EPRt;
- a second computer (26.1 to 26.4) controlled by said slaving device (23.1 to 23.4) and computing the flow rate of fuel to be fed to said engine so as to align said current measured value of the driving parameter with the preset value; and
- fuel supply means (27.1 to 27.4) controlled by said second computer and delivering to said engine the flow rate of fuel computed by the latter,
wherein:
- each supply device (D1 to D4) comprises, in parallel with said device (23.1 to 23.4) for slaving to said corresponding preset value EPRt, the arrangement in series:
• of a conversion table (T), identical for all said supply devices (D1 to D4) and connected to said first computer (20.1 to 20.4) so as to receive said preset value EPRt, said conversion table (T) being able to convert said preset value EPRt into a preset value N1t of said speed of rotation N1; and
• of a slaving device (24.1 to 24.4) receiving said preset value N1t and the corresponding current measured value (Nlm. 1 to Nlm.4) of said speed of rotation N1 intended to align this current measured value with said preset value Nlt; and
- each supply device (D1 to D4) comprises, between said devices (23.1 to 23.4 - 24.1 to 24.4) for slaving to the preset values EPRt and N1t, on the one hand, and said second computer (26.1 to 26.4), on the other hand, a switching means (25.1 to 25.4) able to connect to the latter, in a first state, said slaving device (23.1 to 23.4) associated with the preset value EPRt, and, in a second state, said slaving device (24.1 to 24.4) associated with the preset value Nlt; and
- said switching means (25.1 to 25.4) are controlled in common by a control device (29) so as to toggle from said first state to said second state when the aircraft (A) is in automatic level flight at steady altitude.

7. The system as claimed in claim 6,
wherein said control device (29) is of the AND gate type, delivering a switching order to said switching means (25.1 to 25.4) only when all its inputs (30.a to 30.d) are supplied.

8. The system as claimed in claim 6 or 7,
wherein a timeout device (31) is disposed between said control device (29) and said switching means (25.1 to 25.4).
